# EUROPÄISCHE PATENTANMELDUNG

(11) **EP 1 626 062 A1**
(43) Veröffentlichungstag der Anmeldung: **15.02.2006**
(21) Anmeldenummer: 05106585.2
(22) Anmeldetag: 19.07.2005
(51) Int. Cl.: C08K 3/00, C08K 5/053

(54) **Neuartige Verarbeitungswirkstoffe für Kautschuk-Mischungen**

(30) Priorität: 13.08.2004 DE 102004039545
(71) Anmelder: Rhein Chemie Rheinau GmbH, 68219 Mannheim (DE)
(72) Erfinder: Steger, Lothar, 81545, München (DE); Ruppelt, Dirk, 68219, Mannheim (DE); Cano Sierra, Ana-Maria, 69117, Heidelberg (DE)
(74) Vertreter: Gille Hrabal Struck Neidlein Prop Roos

(57) **Zusammenfassung**

Die vorliegende Erfindung betrifft neuartige helle Füllstoff enthaltende Kautschukmischungen, die unter Verwendung neuer Verarbeitungshilfsstoffe hergestellt werden.

## Beschreibung

Die vorliegende Erfindung betrifft neuartige Verarbeitungswirkstoffe für Kautschuk-Mischungen insbesondere für helle Füllstoffe enthaltende Kautschukmischungen, insbesondere kieselsäurehaltige Kautschukmischungen, sowie sie enthaltende Kautschukmischungen, die Trimethylolpropan und mindestens eine Fettsäure enthalten. Die Kautschukmischungen verfügen über eine sehr gute Verarbeitbarkeit, ohne dass die mechanischen Eigenschaften der vulkanisierten Kautschukmischungen beeinträchtigt sind,

Kieselsäurehaltige Kautschuk- bzw. Reifenmischungen besitzen gegenüber Ruß hohe Mischungsviskositäten, so dass sie in den üblichen Aggregaten zur Gummiherstellung nur schwer verarbeitbar sind,

In DE-A 2 255 577 und DE 4 435 311, EP-A 670 347, US 4,709,065, WO 00/05301 sind bestimmte polysulfidische Silane als Verstärkungsadditive für kieselsäurehaltige Kautschukvulkanisate beschrieben worden. Nachteilig bei der Verwendung der dort beschriebenen polysulfidischen Silane als Verstärkungsadditive für kieselsäurehaltige Kautschukvulkanisate ist jedoch, dass zur Erreichung einer akzeptablen Verarbeitbarkeit relativ große Mengen der teuren polysulfidischen Silane erforderlich sind.

Zur Verbesserung der Verarbeitbarkeit von kieselsäurehaltigen Kautschukmischungen wurden Zusatzstoffe vorgeschlagen, wie Fettsäureester, Fettsäuresalze oder Mineralöle. Die genannten Zusatzstoffe besitzen jedoch den Nachteil, dass sie die Fliessfähigkeit erhöhen, gleichzeitig aber die Spannungswerte bei größerer Dehnung (z.B. 100 bis 300 %) vermindern, so dass die verstärkende Wirkung des Füllstoffs Einbussen erleidet.

Darüber hinaus war es bekannt, Polyalkohole und Polyglykole Kautschukmischungen zuzugeben, um die Verarbeitbarkeit zu verbessern (EP-A 761 734 und EP-A 738 755), Die Polyalkohole und Polyglykole sind jedoch im Hinblick auf die Verbesserung der Fliessfähigkeit und der Anvulkanisationszeit nicht ausreichend.

Aus der EP 0947548 sind Kautschukmischungen bekannt, die einen Destillationsrückstandes aus der technischen Trimethylolpropanherstellung einer bestimmten Viskosität aufweisen.

Aufgabe der vorliegenden Erfindung war es, gut zu verarbeitende, insbesondere fließfähige Kautschukmischung mit niedriger Mischungsviskosität und verlängerter Anvulkanisationszeit bereitzustellen, ohne dass die mechanischen Eigenschaften der vulkanisierten Kautschukmischung beeinträchtigt sind. Die Erfinder der vorliegenden Erfindung fanden überraschend, dass eine Mischung, die Trimethylolpropan und mindestens eine Fettsäure enthält, eine deutliche Verringerung der Mischungsviskosität der füllstoffhaltigen Kautschukmischung bewirkt, mithin zu einer deutlich verbesserten Verarbeitbarkeit und Einarbeitbarkeit der übrigen Bestandteile der Kautschukmischung führt.

Gegenstand der vorliegenden Erfindung ist daher eine Vulkonisierbare Kautschukmischung, enthaltend
a) mindestens ein Dienelastomers,
b) mindestens einen hellen Füllstoff,
c) Trimethylolpropan,
d) mindestens eine Fettsäure und
e) gegebenenfalls weitere Kautschukadditive.

### Komponente a) Dienelastomer

Unter einem Dienelastomer werden erfindungsgemäß zweckmäßig Elastomere verstanden, die Homopolymere oder Copolymere (aus zwei oder mehr Monomeren) sind, und Dienmonomere (Monomere, die zwei Kohlenstoff-KohlenstoffDoppelbindungen aufweisen, die konjugiert oder nicht konjugiert vorliegen) aufweisen. Derartige Dienelastomere schließen beispielsweise ein:
(i) Homopolymere, die durch Polymerisation eines konjugierten Dienmonomers mit 4 bis 12 Kohlenstoffatomen hergestellt werden;
(ii) Copolymere, die durch Copolymerisation eines oder mehrerer konjugierter Diene miteinander und/oder mit einer oder mehreren aromatischen Vinylverbindungen mit 8 bis 20 Kohlenstoffatomen hergestellt werden;
(iii) ternäre Copolymere, die durch Copolymerisation von Ethylen, einem α-Olefin mit 3 bis 6 Kohlenstoffatomen und einem nicht konjugierten Dienmonomer mit 6 bis 12 Kohlenstoffatomen hergestellt sind, beispielsweise Elastomere, die ausgehend von Ethylen, Propylen und einem nicht konjugierten Dienmonomer vom vorgenannten Typ hergestellt werden, insbesondere 1,4-Hexadien, Norbornenethyliden und Dicyclopentadien;
(iv) Copolymere von Isobuten und Isopren (Butylkautschuk), sowie halogenierte, insbesondere chlorierte oder bromierte Typen dieser Copolymere.

Grundsätzlich können erfindungsgemäß alle Arten von Dienelastomeren verwendet werden. Für die Anwendung bei Reifen bzw. Laufflächen von Luftreifen sind jedoch im wesentlichen ungesättigte Dienelastomere, insbesondere Elastomere vom oben genannten Typ (i) oder (ii) mit einem Gehalt an konjugierten Dieneinheiten von bevorzugt mindestens 50 mol-% besonders geeignet.

Von den konjugierten Dienen sind insbesondere 1,3-Butadien, 2-Methyl- 1,3-butadien, 2,3-Di(C1-C5-alkyl)-1,3-butadien, beispielsweise 2,3-Dimethyl-1,3-butadien, 2,3-Diethyl-1,3-butadien, 2-Methyl-3-ethyl-1,3-butadien und 2-Methyl-3-isopropyl-1,3-butadien, Aryl-1,3-butadiene, 1,3-Pentadien und 2,4-Hexadien geeignet.

Von den aromatischen Vinylverbindungen eignen sich beispielsweise Styrol, ortho-, meta- und para-Methylstyrol, ein handelsübliches "Vinyltoluol"-Gemisch, para-t-Butylstyrol, Methoxystyrol, Chlorstyrol, Vinylmesitylen, Divinylbenzol und Vinylnaphthalin.

Die Copolymere können bevorzugt 99 bis 20 Gew.-% Dieneinheiten und 1 bis 80 Gew.-% vinylaromatische Einheiten enthalten. Die Elastomere können beliebige Mikrostrukturen aufweisen, die von den eingehaltenen Polymerisationsbedingungen abhängen, insbesondere der Gegenwart oder Abwesenheit eines Modifizierungsmittels und/oder Randomisierungsmittels und den eingesetzten Mengen des Modifizierungsmittels und/oder Randomisierungsmittels. Die Elastomere können beispielsweise Blockpolymere, statistische Polymere, sequentielle Polymere oder mikrosequentielle Polymere sein; sie können in Dispersion oder in Lösung hergestellt werden; sie können mit einem Kupplungsmittel und/ oder Pfropfungsmittel oder Mittel zur Funktionalisierung gekuppelt und/oder gepfropft bzw, sternförmig verzweigt oder funktionalisiert werden,

Bevorzugt sind: Polybutadiene, insbesondere Polybutadiene mit einem Gehalt an 1,2-verküpften Einheiten im Bereich von 4 bis 80 % oder Polybutadiene mit über 80 % cis-1,4-verknüpften Einheiten, Polyisoprene, Butadien-Styrol-Copolymere, bevorzugt Copolymere mit einem Styrolgehalt von 5 bis 50 Gew.-% bevorzugter 20 bis 40 %, bevorzugt mit einem Gehalt an Butadieneinheiten mit 1,2-Verknüpfungen im Bereich von 4 bis 65 % und bevorzugt einem Gehalt an trans-1,4-verküpften Bindungen im Bereich von 20 bis 80 %, Butadien-lsopren-Copolymere, bevorzugt Copolymere mit einem lsoprengehalt im Bereich von 5 bis 90 Gew.-% und einer Glasübergangstemperatur (Tg) von -40 bis -80 °C und Isopren-Styrol-Copolymere, bevorzugt Copolymere mit einem Styrolgehalt von 5 bis 50 Gew.-% und einer Tg im Bereich von -25 bis -50 °C.

Von den Butadien-Styrol-Isopren-Copolymeren sind insbesondere solche Copolymere geeignet, die einen Styrolgehalt von 5 bis 50 Gew.-% und insbesondere 10 bis 40 %, einen Isoprengeholt von 15 bis 60 Gew.-% und insbesondere 20 bis 50 %, einen Butadiengehalt von 5 bis 50 Gew.-% und insbesondere 20 bis 40 %, einen Gehalt an 1,2-verknüpften Butadieneinheiten von 4 bis 85 %, einen Gehalt an trans-1 ,4-verknüpften Butadieneinheiten von 6 bis 80 %, einen Gehalt an 1,2- und 3,4-verknüpften Isopreneinheiten im Bereich von 5 bis 70 % und einem Gehalt an trans-1,4-verknüpften Isopreneinheiten im Bereich von 10 bis 50 % aufweisen, und weiterhin beliebige Butadien-Styrol-Isopren-Copolymere mit einer Tg im Bereich von -20 bis -70 °C.

Das Dienelastomer wird vorzugsweise aus Polybutadienen (BR), Polyisoprenen (IR), Naturkautschuk (NR), Butadien-Styrol-Copolymeren (SBR), Butadien-Isopren-Copolymeren (BIR), Isopren-Styrol-Copolymeren (SIR), Butadien-Styrol-Isopren-Copolymeren (SBIR) oder den Gemischen von zwei oder mehreren dieser Verbindungen ausgewählt.

Besonders bevorzugt sind S-SBR, S-SBR/NR, S-SBR/NR/BR, S-SBR/BR.

Die erfindungsgemäß hergestellte Zusammensetzung ist vorzugsweise für Laufstreifen von Luftreifen vorgesehen; in diesem Fall ist das Dienelastomer vorzugsweise ein Butadien-Styrol-Copolymer (SBR), das gegebenenfalls im Gemisch mit Polybutadien (BR) und/oder Naturkautschuk (NR) verwendet wird,

Noch bevorzugter ist das Dienelastomer ein S-SBR (Solvent Styrene-Butadiene-Rubber), das in Lösung mit einem Styrolgehalt von 20 bis 30 Gew.-%, einem Gehalt an Vinylbindungen des Butadienanteils im Bereich von 15 bis 65 %, einem Gehalt an trans-1,4-Verknüpfungen im Bereich von 15 bis 75 % und einer Glasübergangstemperatur von -20 bis -55 °C hergestellt wird, wobei dieses Butadien-Styrol-Copolymer gegebenenfalls im Gemisch mit einem Polybutadien und/oder Naturkautschuk verwendet werden kann, wobei das Polybutadien vorzugsweise mehr als 90 % cis-1,4-Verknüpfungen aufweisen kann.

Die erfindungsgemäß hergestellten Zusammensetzungen können ein oder mehrere Dienelastomere enthalten. Zusätzlich können beliebige synthetische Elastomere, die von Dienelastomeren verschieden sind, und Nicht-Elastomere sind, wie beispielsweise thermoplastische Polymere zugesetzt werden,

Die zur Herstellung der erfindungsgemässen Kautschukmischungen einzusetzenden Dienelastomere umfassen insbesondere Naturkautschuk und Synthesekautschuk. Bevorzugte Synthesekautschuke sind beispielsweise bei W, Hofmann, Kautschuktechnologie, Genter Verlag, Stuttgart 1980, beschrieben und umfassen u.a.:
BR - Polybutadien
ABR - Butadien/Acrylsäure-C1-C4-alkylester-Copolymere
CR - Polychloropren
IR - Polyisopren
SBR - Styrol/Butadien-Copolymerisate mit Styrolgehalten von 1 - 60, vorzugsweise 20 - 50 Gew.-%
IIR - Isobutylen/Isopren-Copolymerisate
NBR - Butadien/Acrylnitril-Copolymere mit Acrylnitrilgehalten von 5 - 60, vorzugsweise 10 - 40 Gew.-%
HNBR - teilhydrierter oder vollständig hydrierter NBR-Kautschuk
EPDM - Ethylen/Propylen/Dien-Copolymerisate

sowie Mischungen dieser Kautschuke.

Für die Herstellung von Kraftfahrzeugreifen sind, wie gesagt insbesondere Mischungen von Naturkautschuk, Emulsions-SBR- sowie Lösungs-SBR- und/oder Polybutadien-Kautschuk bevorzugt. Von besonderem Interesse ist der Einsatz von Lösungs-SBR-Kautschuken mit einem Vinylgehalt von 20-60 Gew.-% sowie von Polybutadienkautschuken mit einem hohen 1,4-cis-Gehalt (> 90 %), der mit Katalysatoren auf Basis von Nickel, Kobalt, Titan und/oder Neodym hergestellt wurde, sowie Polybutadienkautschuk mit einem Vinylgehalt von bis zu 75 % sowie die Mischungen der genannten Lösungs-SBR und Polybutadienkautschuke für den Einsatz in den erfindungsgemäßen Kautschukmischungen,

### Komponente b) (Heller Füllstoff)

Ein heller Füllstoff im Sinne der Erfindung schließt einen verstärkenden Füllstoff ein.

Ein verstärkender Füllstoff im Sinne der Erfindung ist bevorzugt ein solcher der bei Zusatz von 10 bis 100 Gew.-% eine Erhöhung des Moduls von mindestens 100% bewirkt.

Erfindungsgemäß können ein oder mehrere helle verstärkende Füllstoffe verwendet werden, "Hell" im Sinne der Erfindung schließt insbesondere Ruß aus. Erfindungsgemäß ist es gleichwohl möglich, zusätzlich zu dem hellen Füllstoff Ruß zu verwenden, insbesondere Ruße vom Typ HAF, ISAF und SAF, die üblicherweise in Luftreifen und insbesondere in den Laufstreifen von Luftreifen eingesetzt werden. Als Beispiele für diese Ruße können neben den unten noch genannten Typen N 115, N134, N234, N339, N347 und N375 genannt werden.

Der Anteil des hellen verstärkenden Füllstoffs beträgt jedoch mehr als 50 Gew.-%, vorzugsweise mehr als 80 Gew.-%, bezogen auf die Gesamtmenge des verwendeten verstärkenden Füllstoffs, Der Anteil von Ruß ist bevorzugt weniger als 50 Gew.-% und bevorzugter weniger als 20 Gew.-%. In einer besonderen Ausführungsform wird in dem erfindungsgemäßen Verfahren kein Ruß zugesetzt. Bei dem verstärkenden hellen Füllstoff handelt es sich vorzugsweise um oxidische Füllstoffe, wie Kieselsäure (SiO₂) oder Aluminiumoxid (Al₂0₃) oder Gemische davon. Bei der verwendeten Kieselsäure kann es sich um beliebige verstärkende Kieselsäuren handeln, die dem Fachmann bekannt sind, insbesondere beliebige Fällungskieselsäuren oder pyrogene Kieselsäuren mit einer BET-Oberfläche sowie einer mit CTAB bestimmten spezifischen Oberfläche, die beide unter 450 m²/g liegen, wobei jedoch hochdispergierbare Fällungskieselsäuren bevorzugt sind, insbesondere wenn die Erfindung zur Herstellung von Reifen mit einem geringen Rollwiderstand dient. Beispiele für bevorzugte hochdispergierbare Kieselsäuren schließen beispielsweise ein: Perkasil KS 430 (AKZO), BV 3380 und Ultrasil7000 (Degussa), Zeosil 1165 MP und 1115 MP (Rhodia), Hi-Sil 2000 (PPG), Zeopol 8715, 8741 oder 8745 (Huber) und behandelte Fällungskieselsäuren wie beispielsweise mit Aluminium "dotierten" Kieselsäuren, die in der EP-A-0 735 088 beschrieben sind, Ein oder mehrere Kieselsäuretypen können verwendet werden. Aluminiumoxid ist bevorzugt ebenfalls ein hochdispergierbares Aluminiumoxid wie in der EP-A-0 810 258 beschrieben. Beispiele schließen ein: Al25 oder CR125 (Baikowski), APA- 1 OORDX (Condea), Aluminiumoxid C (Degussa) und AKP-GO 15 (Sumitomo Chemicals).

Der helle verstärkende Füllstoff kann in Form von Pulvern, Mikroperlen, Granulaten oder Kugeln vorliegen, In einer bevorzugten Ausführungsform werden Kieselsäuren und/ oder Aluminiumoxide verwendet. Besonders bevorzugt sind Kieselsäuren, insbesondere hochdisperse Kieselsäure, hergestellt z.B, durch Fällung von Lösungen von Silikaten oder Flammenhydrolyse von Siliciumhalogeniden mit spezifischen Oberflächen von 5 - 1000, vorzugsweise 20 - 400 m²/g (BET-Oberfläche) und/oder mit durchschnittlichen Primärteilchengrössen von 10 - 400 nm. Die Kieselsäuren können gegebenenfalls auch als Mischoxide mit anderen Metalloxiden, wie Al-, Mg-, Ca-, Ba-, Zn-, Zr-, Ti-oxiden vorliegen. Synthetische Silikate, wie Aluminiumsilikat, Erdalkalisilikate, wie Magnesiumsilikat oder Calciumsilikat, mit BET-Oberflächen von 20 - 400 m²/g und Primärteilchendurchmessern von 10 - 400 nm, Natürliche Silikate, wie Kaolin und andere natürlich vorkommende Kieselsäuren, Glasfasern und Glasfaserprodukte (Matten, Stränge) oder Mikroglaskugeln, Metalloxide, wie Zinkoxid, Calciumoxid, Magnesiumoxid, Aluminiumoxid, Metallcarbonate, wie Magnesiumcarbonat, Calciumcarbonat, Zinkcarbonat, Metallhydroxide, wie Aluminiumhydroxid, Magnesiumhydroxid sind ebenfalls geeignet, werden aber bevorzugt nur in Mischung mit den bevorzugt verwendeten Kieselsäuren verwendet. Die erwähnten hellen Füllstoffe werden bevorzugt in Mengen von 1 bis 200 Gew.-Teilen, insbesondere in Mengen von 10 bis 150 Gew.-Teilen, bezogen auf 100 Gew.-Teile der Dienelastomere eingesetzt.

Wie erwähnt, können in gewissem Umfang auch Russe als Füllstoffe verwendet werden. Sie werden beispielsweise nach dem Flammruss, Furnace- oder Gasrussverfahren hergestellt und besitzen BET-Oberflächen von 20 bis 200 m²/g, wie z.B. SAF-, ISAF-, HAF-, FEF- oder GPF-Russe. Daneben können zusätzlich auch Kautschukgele als Füllstoffe dem erfindungsgemässen Kautschukmischungen zugegeben werden. Solche Kautschukgele basieren insbesondere auf Polybutadien-, Polychloropren-, NBR- oder SBR-Kautschuken,

Der Gesamtgehalt an verstärkendem hellen Füllstoff und gegebenenfalls weiteren Füllstoffen wie Ruß liegt vorzugsweise im Bereich von 10 bis 300 Gewichtsteilen, noch bevorzugter 30 bis 250 Gewichtsteilen und besonders bevorzugt 50 bis 200 Gewichtsteilen pro 100 Gewichtsteile des Dienelastomers gemäß Komponente a), Die optimale Menge hängt ab von der Art des verwendeten hellen Füllstoffs und der gewünschten Anwendung. Ein Fahrradreifen erfordert einen geringeren Verstärkungsgrad als ein Luftreifen für Personenkraftwagen oder Nutzfahrzeuge wie Lastkraftwagen.

### Komponente c) (Trimethylolpropan)

Als Komponente c) enthalten die erfindungsgemäßen Kautschukmischungen Trimethylolpropan (TMP - 2-Hydroxymethyl-2-ethyl-propandiol-1,3). Seine Herstellung erfolgt technisch im allgemeinen durch Aldolkondensation und Reduktion von n-Butyraldehyd mit Formaldehyd in Ausbeuten von ca. 90 % und anschließender destillativer Aufarbeitung, In diesem Zusammenhang sei beispielsweise auf Ullmann, Verlag Chemie, Weinheim 1976 (4) 7, Seite 231 sowie auf die dort zitierte Literatur verwiesen. Das TMP dient wie Komponente d) der Verbesserung der Verarbeitbarkeit der Kieselsäure-haltigen Kautschukmischungen, insbesondere als Mittel mit dem die Viskosität der Kautschukmischungen bei der Verarbeitung herabgesetzt werden kann. Die erfindungsgemäßen Kautschukmischungen enthalten Trimethylolpropan bevorzugt in Mengen von etwa 0,5 bis 10 Gew.-Teilen, bezogen auf 100 Gew.-Teile der Komponente a). TMP wird den erfindungsgemäßen Kautschukmischungen besonders bevorzugt in einer Mischung mit Komponente d), wie unten näher beschrieben, zugesetzt,

### Komponente d) Fettsäure

Als Komponente d) enthalten die erfindungsgemäßen Kautschukmischungen bevorzugt mindestens eine Fettsäure. Die Fettsäure dient wie die zuvor genannte Komponente c) als Mittel zur Verbesserung der Verarbeitbarkeit der Kieselsäure-haltigen Kautschukmischungen, insbesondere als Mittel mit dem die Viskosität der Kautschukmischungen bei der Verarbeitung herabgesetzt werden kann. Geeignete Fettsäure schließen natürlich vorkommende und synthetische Fettsäuren und Mischungen davon ein. Bevorzugt sind gesättigte und ungesättigte aliphatische geradkettige, verzweigte oder cyclische Carbonsäuren mit einer Kohlenstoffanzahl von 6 bis 22, bevorzugt 8 bis 20 sowie Mischungen davon.

Beispiele sind natürlich vorkommende gesättigte Fettsäuren wie Capronsäure (Hexansäure), Caprylsäure (Oktansäure), Caprinsäure (Decansäure), Laurinsäure (Dodecansäure), Myristinsäure (Tetradecansäure), Palmitinsäure (Hexadecansäure), Stearinsäure (Octadecansäure), Arachinsäure (Eicosansäure), Behensäure (Docosansäure), Lignocerinsäure (Tetracosansäure), und Cerotinsäure (Hexacosansäure) sowie Mischungen daraus, Weiterhin kann 2-Ethylhexan-Säure verwendet werden,

Weitere Beispiele sind einfach oder mehrfach ungesättigte Fettsäuren sowie Mischungen davon, wie Myristoleinsäure (9:10 Tetradecensäure), Polmitoleinsdure (9:10 Hexadecensäure), Ölsäure (9:10 Oktadecensäure), Vaccensäure (11:12 Oktadecensäure), Petroselinsäure (6:7 Oktadecensäure), Gadoleinsäure (9:10 Eicosensäure), 11:12 Eicosensäure, Erucasäure (12:14 Docosensäure), Linolsäure (9:10 12:13 Octadecadiensäure), Linolensäure (Octadecatriensäure) etc, sowie Mischungen daraus.

Weitere Beispiele sind gesättigte oder ungesättigte Hydroxysubstituierte Fettsäuren, wie Rizinol-Säure, sowie Fettsäuren mit alicyclischen Seitenketten, insbesondere Cyclopentenyl-Fettsäuren,

Auch Gemische von Fettsäuren sind besonders geeignet, wie solche die auf natürlichen Rohstoffen basieren, die beispielsweise bei der Fettsäurespaltung anfallen, wie beispielsweise Kokos-, Raps- und Sojafettsäuren, sowie deren Fraktionen, aber auch andere technische Gemische, die überwiegend aus Fettsäuren bestehen, wie beispielsweise Tallöl-Fettsäuren und insbesondere Talg-Fettsäuren.

Besonders bevorzugte Fettsäuren sind Destillationsprodukte aus tierischen Abfällen, wie von Schweinen, Rindern oder Fischen, insbesondere sogenannte Talgfettsäure-Mischungen, die ungehärtet oder gehärtet sein können, wie Fettsäuremischungen die unter der Bezeichnung Radiacid® 409 (Oleon) erhältlich sind,

Die erfindungsgemäßen Kautschukmischungen enthalten Fettsäuren bevorzugt in Mengen von etwa 0,5 bis 20 Gew.-Teilen, bevorzugt von 1 bis 10 Gew.-Teilen, bezogen auf 100 Gew.-Teile der Komponente a).

Die Komponenten c) und d) werden den Kautschukmischungen besonders bevorzugt in Form einer sie enthaltenden Mischung zugesetzt, Die Erfindung betrifft somit auch eine die Komponenten c) und d) enthaltende Mischung sowie deren Verwendung als Verarbeitungshilfsstoff für Kautschukmischungen, insbesondere helle Füllstoffe enthaltende Kautschukmischungen, insbesondere kieselsäure-haltige Kautschukmischungen, Insbesondere die Verwendung von Kieselsäuren führt in Polymermatrices zu einer verdickenden Wirkung, Die Verwendung der genannten Mischung führt überraschend insbesondere zu einer Erhöhung der Fließfähigkeit, also einer geringen Viskosität und Strukturviskosität der Kautschukmischungen, ohne dass es zu einer Verschlechterung der mechanischen Eigenschaften der vulkanisierten Kautschukmischungen kommt.

Die genannten, die Komponenten c) und d) enthaltenden Mischungen bestehen bevorzugt zumindestens 80 Gew.-%, bevorzugter mindestens 90 Gew.-%, noch bevorzugter zu mindestens 95 Gew,-% aus den Komponenten c) und d). Sie können weiterhin beispielsweise weitere Verarbeitungshilfsstoffe, wie Polyole, oder Streckmittel etc. enthalten. Die genannten Mischungen enthalten die Komponenten c) und d) bevorzugt in einem Gewichts-Verhältnis von bevorzugt etwa 10 ; 1 bis 1 : 20. Die erfindungsgemäßen Kautschukmischungen enthalten die genannte Mischung bevorzugt in einem solchen Anteil, dass die Menge der Komponenten c) und d) in der Kautschukmischung bevorzugt von etwa 0, 1 bis 20 Gew.-Teile, bezogen auf 100 Gew.-Teile der Komponente a) beträgt.

### Weitere Kautschukadditive e)

### Kupplungsmittel

In einer bevorzugten Ausführungsform enthalten die erfindungsgemäßen Kautschukmischungen als Komponente e) bevorzugt mindestens ein bevorzugt mindestens ein sogenanntes Kupplungsmittel, Das Kupplungsmittel dient dazu, den hydrophilen verstärkenden Füllstoff durch Modifizierung seiner Oberfläche mit der hydrophoben Kautschukmatrix zu verbinden (s. z.B. U. Görl, 25 Jahre Organosilane in der Reifenanwendung, GAK 51, 416 (1998); S. Wolff et al, "Silica-Based Tread Compounds: Background and Performance, präsentiert auf der Tyretech Conference 1993). Die Kupplungsmittel sind im allgemeinen bifunktionelle Verbindungen, insbesondere bifunktionelle Organosilane, die zwei Arten von funktionellen Gruppen, die Alkoxysilylgruppe, die an den hellen Füllstoff bindet, und die schwefelhaltige Gruppe, die an das Elastomer bindet, enthalten.

Erfindungsgemäß können ein oder mehrere polysulfidhaltige Alkoxysilane in Kombination verwendet werden,

Polysulfidhaltige Alkoxysilane sind dem Fachmann als Kupplungsmittel (heller Füllstoff/ Dienelastomer) in Kautschukmischungen, die zur Herstellung von Luftreifen vorgesehen sind, bekannt; und es kann insbesondere auf die Patente US 3842111, US 3873489, US 3978103 und US 3997581, US 5580919, US 5583245, US 5663396, US 5684171, US 5684172 und US 5696197 verwiesen werden.

Bevorzugt sind insbesondere symmetrische polysulfidhaltigen Alkoxysilane der folgenden Formel:

A-B-Sn-B-A

worin n eine ganze Zahl von 2 bis 8 ist; B eine zweiwertige, gegebenenfalls substituierte Kohlenwasserstoffgruppe ist, und A eine Gruppe der Formel

-Si(R1)₃₋ₓ(R2)ₓ

worin x 1 bis 3 ist, und R1 eine gegebenenfalls substituierte Alkylgruppe (bevorzugt mit 1 bis 20 Kohlenstoffatomen), eine Cycloalkylgruppe (bevorzugt mit 3 bis 20 Kohlenstoffatomen) oder eine Arylgruppe (bevorzugt mit 6 bis 20 Kohlenstoffatomen) ist, R2 eine gegebenenfalls substituierte Alkoxygruppe (bevorzugt mit 1 bis 20 Kohlenstoffatomen) oder eine Cycloalkoxygruppe (bevorzugt mit 3 bis 20 Kohlenstoffatomen) ist.

n ist bevorzugt eine ganze Zahl von 2 bis 5, In handelsüblichen polysulfidhaltigen Alkoxysilonen liegt wie dem Fachmann bekannt ist, üblicherweise eine Mischung von polysulfidhaltigen Alkoxysilanen mit unterschiedlichen Werten "n" vor. Der Mittelwert für "n" in diesen Gemischen liegt im Bereich von 2 bis 6, bevorzugt 3 bis 5 und insbesondere bei etwa 4. In einer besonderen Ausführungsform kann der Wert für n auch 2 betragen.

Die vorstehend erwähnte zweiwertige, gegebenenfalls substituierte Kohlenwasserstoffgruppe B ist bevorzugt eine gesättigte oder ungesättigte Kohlenwasserstoffgruppe mit 1 bis 18 Kohlenstoffatomen, besonders bevorzugt eine C1-18-Alkylengruppe (bzw. Alkandiyl-Gruppe) oder C6-10 Arylengruppe geeignet, bevorzugter C1-C10-Alkylengruppen, insbesondere C2-C4-Alkylengruppen und besonders Propylen (Propan-1,3-diyl).

Die Gruppen R1 sind vorzugsweise C1-C6-Alkylgruppen. Cyclohexyl oder Phenyl, insbesondere C1-C4-Alkylgruppen und besonders Methyl und/oder Ethyl,

Die Gruppen R2 sind bevorzugt C1-C8-Alkoxygruppen oder C5-C8-Cycloalkoxygruppen und insbesondere Methoxy und/oder Ethoxy.

Hinsichtlich dieser polysulfidhaltigen Alkoxysilane sowie Verfahren zu ihrer Herstellung kann beispielsweise auf die US 5684171 und US 5684172 verwiesen werden.

Das erfindungsgemäß verwendete polysulfidhaltige Alkoxysilan ist vorzugsweise ein Polysulfid, insbesondere ein Disulfid oder ein Tetrasulfid eines Bis(C1-C4)Alkoxy-[und gegebenenfalls (C1-C4)]alkyl]silylpropyls, noch bevorzugter Bis(C1-C4)-trialkoxysilylpropyl und insbesondere Bis(3-triethoxysilylpropyl) oder Bis(3-trimethoxysilylpropyl), Das Disulfid von Bis(triethoxysilylpropyl) oder TESPD der Formel [(C₂H₅O)₃Si(CH₂)₃S]₂ ist beispielsweise von der Firma Degussa unter den Bezeichnungen Si266 oder Si75 (letzteres in Form eines Gemisches von Di-Sulfid (75 Gew.-%) und Polysulfid) oder auch von der Firma Witco unter der Bezeichnung Silquest Al589 im Handel erhältlich. Das Tetrasulfid von Bis(triethoxysilylpropyl) oder TESPT der Formel [(C₂H₅O)₃Si(CH₂)₃S₂]₂ ist beispielsweise von der Firma Degussa unter der Bezeichnung Si69 (oder X50S mit 50 Gew.-% Ruß als Träger) oder von der Firma Witco unter der Bezeichnung Silquest Al289 erhältlich (jeweils kommerzielles Gemisch mit einem Mittelwert von n von ungefähr vier 4), Erfindungsgemäß wird TESPT (Si69) besonders bevorzugt verwendet, In den erfindungsgemäß hergestellten Kautschukmischungen kann der Gehalt des polysulfidhaltigen Alkoxysilans bevorzugt im Bereich von 0,5 bis 15 Gew.-%, bezogen auf das Gesamtgewicht des verstärkenden hellen Füllstoffs liegen. Erfindungsgemäß ist es auch möglich, während der Füllstoffaktivierung zusätzlich mindestens einen Kupplungsaktivator zu verwenden (s, z.B. EP 1102812). Erfindungsgemäß ist dies jedoch weniger bevorzugt.

Das polysulfidhaltige Alkoxysilan kann vorab an das Dienelastomer über die schwefelhaltige funktionelle Gruppe gekuppelt werden, wobei die alkoxysilylhaltige Gruppe zur Kupplung an den hellen verstärkenden Füllstoff zurückbleibt, Das polysulfidhaltige Alkoxysilan kann auch über die alkoxysilylhaltige Gruppe vorab an den verstärkenden hellen Füllstoff gekoppelt werden, wobei der so vorgekuppelte Füllstoff dann über die sulfidhaltige Gruppe an das Dienelastomer gekuppelt werden kann. Aus Gründen der besseren Verarbeitbarkeit der Zusammensetzungen im unvulkanisierten Zustand wird das Kupplungsmittel jedoch vorzugsweise entweder an den verstärkenden hellen Füllstoff gebunden und dann, gebunden an den Füllstoff, mit dem Dienelastomer vermischt oder im nicht-umgesetzten Zustand mit dem Füllstoff und dem Dienelastomer vermischt,

Die Füllstoffaktivierung kann einstufig (Zusammengeben von Füllstoff, Dienelastomer und Alkoxysilan auf einmal) oder zweistufig (1) Zusammengeben von Alkoxysilan und Füllstoff oder Dienelastomer, bevorzugt Füllstoff und 2. Zugeben der noch fehlenden Komponente (Füllstoff oder Dienelastomer) verlaufen,

### Vulkanisationsmittel

Erfindungsgemäß können an sich beliebige Vulkanisationsmittel verwendet werden. Beispiele des Vulkanisationsmittels umfassen Schwefel und Schwefeldonatoren, die in einer Menge, bezogen auf Schwefel, von 0,5 bis 5,0 Gew.-Teilen, bevorzugt 1 bis 2 Gew.-Teilen, auf 100 Gew.-Teile des Dienelastomers (Komponente a)) zugegeben werden können. Wenn die Menge weniger als 0,5 Gew.-Teile beträgt, nehmen die Bruchfestigkeit und die Abriebbeständigkeit des vulkanisierten Gummis ab. Wenn die Menge 5 Gew.-Teile übersteigt, besteht die Neigung, dass sich die Elastizität des Gummis verschlechtert. Das bevorzugte Vulkanisierungsmittel stellt elementarer Schwefel dar. Geeignete Vulkanisierungsmittel sind beispielsweise im Kapitel 4, "Curing Agents" des Rubber Handbook, 9. Auflage, 1996 aufgeführt.

### Vulkanisationsbeschleuniger

Die erfindungsgemäßen Kautschukmischungen enthalten bevorzugt mindestens einen Vulkanisationsbeschleuniger. Dieser kann aus an sich bekannten Vulkonisotionsbeschleunigern und Mischungen daraus ausgewählt werden. Ein erfindungsgemäß bevorzugter Vulkanisationsbeschleuniger wird aus der Gruppe ausgewählt, die besteht aus:
(i) Dithiophosphat-Verbindungen,
(ii) Sulfenamid-Verbindungen und
(iii) Thiazol-Verbindungen,

(i) Dithiophosphat-Verbindungen als Vulkanisationsbeschleuniger sind an sich aus ruß-gefüllten Systemen bekannt (z.B. Helfried Ehrend, "Über die Wirkung von Thiophosphaten in Vernetzungssystemen von Dienkautschuke" Gummi, Asbest und Kunststoffe 1977, 30, 68-71 und EP 0832920 (Bridgestone)), Erfindungsgemäß werden sie bevorzugt ausgewählt aus Verbindungen der Formel 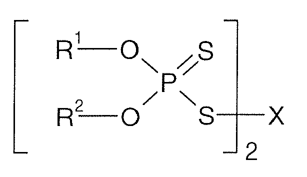 und

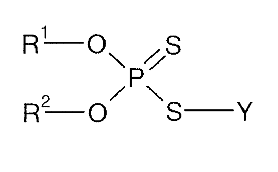

worin R¹ und R² jeweils unabhängig voneinander eine gegebenenfalls substituierte C1 bis C10-Alkylgruppe und/oder eine gegebenenfalls substituierte C6 bis C10-Arylgruppe sind, X ein zweiwertiger Rest und Y ein einwertiger Rest sind, die jeweils mindestens ein von Kohlenstoff verschiedenes Element aufweisen. Der in den oben gezeigten Formeln vorhandene Bindungsstrich zwischen dem S-Atom und den Resten X und Y kann eine kovalente bis ionische Bindung verkörpern. Bei der ionischen Bindung trägt das S-Atom eine negative Ladung,

Zweiwertige Rest X werden bevorzugt ausgewählt aus zweiwertigen Metallen, wie insbesondere Zn, Cu etc oder zweiwertigen Polysulfidresten -(S)_{y}-, worin y 1 bis 8, bevorzugt 2 bis 6 ist, und ein Durchschnittswert sein kann. Besonders bevorzugt sind zweiwertige Metalle, bei denen die Bindung zum S-Atom eher ionischen Charakter besitzt, Besonders bevorzugt ist Zink, Freie Koordinationsstellen am Metall können durch Lewis-Basen, wie Amine oder Ether, besetzt sein,

Einwertige Reste Y können einwertige Metalle (Metallionen) oder Ammoniumreste sein. Bevorzugt sind die einwertigen Reste Y Ammoniumreste, wie NH_{4-z}(R)_{z}⁺, worin R eine organische Gruppe ist, etc.

Bevorzugt ist die Dithiophosphate-Verbindung eine Zinkdithiophosphat-Verbindung (auch als "DPTZn" abgekürzt) der folgenden Formel: 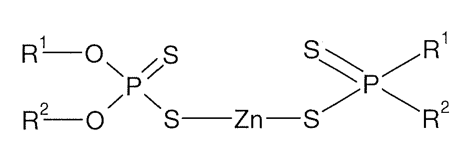
wobei in die Gruppen R¹ und R² gleich oder verschieden, bevorzugt gleich sind, und wie oben definiert sind. Bevorzugt sind die Gruppen R¹ und R² geradkettige oder verzweigte, substituierte oder unsubstituierte Alkylgruppen oder Cycloalkylgruppen mit bis zu 10 Kohlenstoffatomen, insbesondere C2-C8 Alkylgruppen oder C5-C10-Cycloalkylgruppen. Bevorzugte Alkylgruppen können insbesondere Ethyl, n-Propyl, Isopropyl, n-Butyl, Isobutyl und Cyclohexyl und vor allem die C2-C4-Alkylgruppen sein. Besonders bevorzugt ist R¹ und R² n-Propyl oder Isopropyl.

Als Beispiele für die DTPZn können beispielsweise die Zinkdialkyldithiophosphate, die von der Firma Rhein-Chemie, (Deutschland) unter den Bezeichnungen Rhenocure TP/ G und TP/ S, das Produkt, das von der Firma Monsanto unter der Bezeichnung Vocol S (Dibutyldithio-Phosphat) im Handel ist, oder die Produkte genannt werden, die in der EP-A-0832920, EP-A-692 518 oder CA-A-2 153 509 beschrieben sind. Weitere geeignete Dithiophosphat-Verbindungen sind Kapitel 5, "Accelerators" des Rubber Handbook, 9, Auflage, 1996 aufgeführt,

Der Fachmann kann die optimale Menge der Dithiophosphat-Verbindung in Abhängigkeit von der gewünschten Anwendung, dem gewählten Dienelastomer, der Menge des Vulkanisationsmittels etc. auswählen. Bevorzugt beträgt die Menge 0,2 bis 5 Gew.-Teile, vorzugsweise 0,25 bis 3 Gew.-Teile, bevorzugter 0,5 bis 1,5 Gew.-Teile bezogen auf die 100 Gew.-Teile des Dienelastomers (Komponente a)).

Erfindungsgemäß kann weiterhin bevorzugt eine oder mehrere Sulfenamid-Verbindungen (ii) und/oder Thiazol-Verbindung (iii) bevorzugt mindestens eine Sulfenamid-Verbindung in Kombination mit der Dithiophosphat-Verbindung als Vulkanisationsbeschleuniger verwendet werden. Derartige Sulfenamid-Verbindungen weisen üblicherweise das Strukturelement
-S-NR₂- auf, worin R Wasserstoff oder ein organischer Rest ist.
Bevorzugte Sulfenamide weisen die Struktur

R³-S-NR⁴₂

auf, worin R³ bevorzugt gegebenenfalls substituiertes Heteroaryl, bevorzugter benzokondensiertes Heteroaryl, besonders bevorzugt Benzothiazol ist und R⁴ Wasserstoff und/oder ein gegebenenfalls substituierter geradkettiger, verzweigter oder cyclischer, bevorzugt gesättigter Kohlenwasserstoffrest mit bis zu 12 Kohlenstoffatomen, bevorzugt ein verzweigter oder cyclischer Alkylrest mit bis zu 6 Kohlenstoffatomen, noch bevorzugter Cyclohexyl oder tert.-Butyl ist ist.

Bevorzugte Beispiele sind Sulfenamide, die einen Benzothiazolrest aufweisen, wie das CBS (N-Cyclohexyl-2-benzothiazolsulfenamid) der Formel 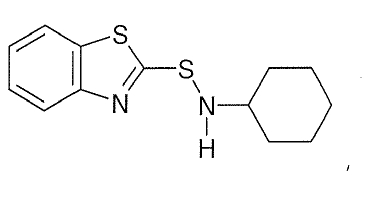 das DCBS (Di-N-cyclohexyl-2-benzothiazolsulfenamid) der Formel 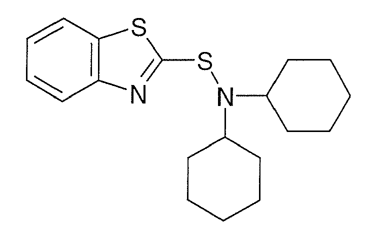 und das TBBS der Formel 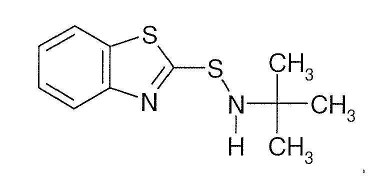 Geeignete Marktprodukte sind Kapitel 5, "Accelerators" des Rubber Handbook, 9, Auflage, 1996 aufgeführt, Die Menge der Sulfenamid-Verbindung, die bevorzugt in Kombination mit der Dithiophosphat-Verbindung verwendet wird, beträgt zweckmäßig 0,1 bis 4 Gew.-Teile, vorzugsweise 0,2 bis 3 Gew.-Teile, bevorzugter 0,5 bis 2 Gew,-Teile bezogen auf die 100 Gew,-Teile des Dienelastomers (Komponente a)).

Die erfindungsgemäß erhaltenen Zusammensetzungen können weiterhin eine oder mehrere Benzothiazol-Verbindung als Vulkanisationsbeschleuniger bevorzugt zusätzlich zu dem Dithiophosphat enthalten, Benzothiazol-Verbindungen sind solche Verbindungen, die mindestens einen Benzothiazol-Rest aufweisen, der gegebenenfalls substituiert wein kann. Erfindungsgemäß soll der Begriff "Benzothiazol-Verbindungen" so zu verstehen sein, dass er keine Sulfenamid-Verbindungen gemäß vorstehender Definition einschließt, Sulfenamid-Verbindungen also vom Umfang der Benzothiazol-Verbindungen erfindungsgemäß ausgeschossen sind. Solche Benzothiazol-Verbindungen, die keine Sulfenomidgruppe -S-NR₂ aufweisen, sind z.B.: Mercaptobenzothiazole und Dibenzothlozolyldisulfide, und bevorzugte Beispiele umfassen alkylierte Mercaptobenzothiazole und Bis(alkylierte benzothiazolyl)disulfide. Spezifische Beispiele umfassen Mercaptobenzothiazol, 4-Methylmercaptobenzothiazol, 4-Ethylmercaptobenzothiazol, 2,2'-Dithiobismercaptobenzothiazol, 2,2'-Dithiobis(4-methylmercaptobenzothiazol), 2,2'-Dithiobis(4-ethylmercaptobenzothiazol). Ein bevorzugter Vertreter ist das MBTS, 2,2'-Dithiobis[benzothiazol], der Formel 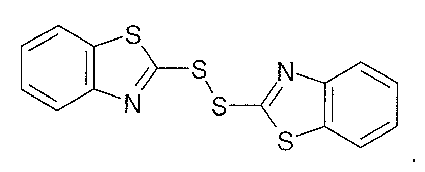 Weitere geeignete Marktprodukte sind Kapitel 5, "Accelerators" des Rubber Handbook, 9. Auflage, 1996 aufgeführt. Die Menge der Thiazol-Verbindung, die in Kombination mit der Dithiophosphat-Verbindung verwendet wird, beträgt zweckmäßig 0,1 bis 4 Gew.-Teile, vorzugsweise 0,2 bis 3 Gew.-Teile, bevorzugter 0,5 bis 2 Gew.-Teile bezogen auf die 100 Gew.-Teile des Dienelastomers (Komponente a)).

Die erfindungsgemäß erhaltenen Zusammensetzungen enthalten bevorzugt eine Sulfenamid-Verbindung wie vorstehend definiert.

Die erfindungsgemäß erhaltenen Zusammensetzungen können weitere in mit Schwefel vernetzbaren Dienkautschukmischungen, die zur Herstellung von Luftreifen vorgesehen sind, üblicherweise verwendeten Bestandteile enthalten, wie Weichmacher, Pigmente, Schutzmittel, wie Antioxidantien und Antiozonantien, weitere Vernetzungssysteme auf der Basis von Peroxid und/oder Bismaleimiden, weitere Vulkanisationsbeschleuniger, Vulkanisationsaktivatoren, Strecköle und dergleichen. Der verstärkende helle Füllstoff kann mit einem herkömmlichen wenig oder nicht verstärkenden hellen Füllstoff kombiniert werden, beispielsweise Tonen, Bentonit, Talk, Kreide, Kaolin und Titandioxiden. Die erfindungsgemäß hergestellten Zusammensetzungen können weiterhin Mittel zum Beschichten des verstärkenden hellen Füllstoffs oder allgemein Hilfsmittel für die Herstellung enthalten, die durch eine Verbesserung der Dispersion des hellen Füllstoffs in der Kautschukmischung oder eine Erniedrigung der Viskosität der Zusammensetzungen in bekannter Weise ihre Verarbeitbarkeit im unvulkanisierten Zustand verbessern, wobei es sich beispielsweise um Alkylalkoxysilane (insbesondere Alkyltriethoxysilane), Polyole, Polyether (beispielsweise Polyethylenglykole), primäre, sekundäre oder tertiäre Amine, hydroxylierte oder hydrolysierbare Polyorganosiloxane, wie beispielsweise alpha,omega- Dihydroxypolydiorganosiloxane (insbesondere alpha,omega- Dihydroxypolydimethylsiloxane) handeln kann, Die erfindungsgemäß hergestellten Zusammensetzungen können ferner weitere Kupplungsmittel enthalten, die von den polysulfldhaltigen Alkoxysilanen verschieden sind. Derartige übliche Zusatzstoffe sind im Rubber Handbook, 9, Auflage, 1996 aufgeführt,

Ein bevorzugte erfindungsgemäße enthält, bezogen auf 100 Gew.-Teile der Komponente a):
von 5 bis 100 Gew.-Teile eines oder mehrerer heller Füllstoffe,
von 0,1 bis 20 Gew.-Teile der Komponenten c) und d), wobei sich die Mengenangabe auf die Summe der Mengen der Komponenten b) und c) bezieht,
von 0,1 bis 10 Gew.-Teile mindestens eines Vulkanisationsmittels,
von 0 bis 150 Gew.-Teile eines oder mehrerer weiterer Kautschukadditive.

Die vorliegende Erfindung betrifft weiterhin ein Verfahren zur Herstellung der erfindungsgemäßen Kautschukmischung bei dem eine Mischung, enthaltend Trimethylolpropan und mindestens eine Fettsäure, zu einer Kautschukmischung zugegeben wird,

Insbesondere umfasst das Verfahren bevorzugt die folgenden Schritte:
(i) Mischen mindestens eines Dienelastomers, mindestens eines hellen Füllstoffs und gegebenenfalls mindestens eines Kupplungsmittels für den genannten Füllstoff, anschließend
(ii) Zugeben einer Mischung, enthaltend Trimethylolpropan und mindestens eine Fettsäure, und anschließend
(iii) Zugeben der übrigen Bestandteile der Kautschukmischung.

Besonders wichtig ist es, dass das Trimethylolpropan und die Fettsäure(n) unmittelbar zur Mischung des Dienelastomers bzw, der Dienelastomere und dem hellen Füllstoff (und gegebenenfalls dem Kupplungsmittel für den hellen Füllstoff) gegebenen werden. Im Prinzip können dabei Trimethylolpropan und die Fettsäure(n) zusammen oder getrennt voneinander zugegeben werden. Wichtig ist es, sie vor der Zugabe der übrigen Bestandteile der Kautschukmischung, wie der Bestandteile des gewählten Vulkanisationssystems, wie Vulkanisationsmittel, Vulkanisationsbeschleuniger und Vulkanisationsaktivatoren zuzugeben.

Die erfindungsgemäßen Kautschukmischungen können in den üblichen Appaturen hergestellt werden, wie Mischaggregaten, insbesondere Walzen, Innenmischern und Mischextrudern. Die Vulkanisation der erfindungsgemäßen Kautschukmischungen kann bei Temperaturen von bevorzugt 100 bis 200°C, bevorzugter 130 bis 180°C, gegebenenfalls bei Drücken von 10 bis 200 bar, erfolgen. Die Vulkanisation wird an sich in bekannter Weise während einer ausreichenden Zeitspanne durchgeführt, die beispielsweise im Bereich von 5 bis 90 min liegen kann und insbesondere von der Vulkanisationstemperatur, dem gewählten Vulkanisationssystem und der Kinetik der Vulkanisation der jeweiligen Zusammensetzung abhängt.

Die Erfindung betrifft weiterhin die Verwendung der erfindungsgemäßen Kautschukmischung zur Herstellung von Luftreifen oder Halbfertigprodukten für Luftreifen, wie Laufstreifen, Unterschichten für Laufstreifen, Scheitellagen, Seitenprofile, Karkassenlagen, Reifenwülste, Protektoren, Schläuche oder Innenseiten für schlauchlose Reifen etc..

Die Erfindung betrifft weiterhin ein Verfahren zur Herstellung von vernetzten Elastomerformteilen, dass das Einbringen der erfindungsgemäß hergestellten Kautschukmischungen nach in eine Form und das anschließende Vulkanisieren der Kautschukmischung in der Form umfasst.

Die Erfindung betrifft weiterhin sowohl die oben beschriebenen erfindungsgemäßen Kautschukmischungen im Rohzustand (d.h. vor der Vulkanisation) als auch vulkanisiert (d.h. nach der Vernetzung oder Vulkanisation). Die erfindungsgemäß hergestellten Zusammensetzungen können selbstverständlich einzeln oder im Verschnitt mit beliebigen anderen zur Herstellung von Luftreifen verwendbaren Kautschukmischungen verwendet werden.

Die Erfindung betrifft weiterhin die Elastomerformteile, die durch Vulkanisation der erfindungsgemäßen Kautschukmischungen erhalten werden,

Die erfindungsgemäßen Trimethylolpropan und Fettsäuren enthaltenden Kautschukmischungen zeichnen sich insbesondere durch eine besonders gute Fliessfähigkeit, hohe Verarbeitungssicherheit, sowie verbesserter Vulkanisationskinetik aus und liefern Vulkanisate mit höheren Spannungswerten. Sie eignen sich daher insbesondere auch zur kostengünstigen Herstellung von hochverstärkten, abriebbeständigen Formkörpern, wie Kabelmäntel, Schläuche, Treibriemen, Förderbänder, Walzenbeläge, (Luft-)Reifen, Schuhsohlen, Dichtungsringe und Dämpfungselemente. Ganz besonders bevorzugt ist die Verwendung der erfindungsgemäßen Kautschukmischungen für die Herstellung von rollwiderstandsarmen Reifenlaufflächen.

Die in den erfindungsgemäßen Kautschukmischungen enthaltenden Komponenten c) und d) werden den Kautschukmischungen vorteilhaft in Form einer fertige Mischung zugeführt.

Die Erfindung betrifft daher weiterhin die Verwendung mindestens einer Mischung, enthaltend Trimethylolpropan und mindestens eine Fettsäure, als Verarbeitungshilfsstoff für Kautschukmischungen, insbesondere als Verarbeitungshilfsstoff für helle, insbesondere verstärkende Füllstoffe enthaltende Kautschukmischungen, insbesondere Kieselsäure-haltige Kautschukmischungen, Die Mischung enthält dabei besonders bevorzugt eine Mischung aus Fettsäuren, ganz besonders bevorzugt eine Mischung von sogenannten Talgfettsäuren, die gehärtet und/oder ungehärtet sein kann, Die Mischung kann vorteilhaft zur Verringerung der Viskosität der füllstoffhaltigen Kautschukmischungen verwendet werden ohne dass die Wirkung der Füllstoffe auf die mechanischen Eigenschaften der vulkanisierten Kautschukmischungen beeinträchtigt wird. Die erfindungsgemäße Mischung enthält bevorzugt mindestens 80 Gew.-%, bevorzugter mindestens 90 Gew.-% noch bevorzugter mindestens 95 Gew.-% der Komponenten c) und d), bezogen auf das Gewicht der Mischung, Die Mischung kann in einem Anteil von bevorzugt weniger als 20 Gew.-% weitere Stoffe enthalten, wie z.B. weitere Verarbeitungshilfsstoffe, wie Polyole, wie Polyethylenglykole, Streckmittel etc. In der erfindungsgemäßen Mischung beträgt das Gewichtsverhältnis des Trimethylolpropans zu den Fettsäure(n) bevorzugt von 10 ; 1 bis 1 : 20. Die erfindungsgemäße Mischung kann unter Verwendung üblicher Mischer hergestellt werden.

Die Erfindung kann durch die folgenden Beispiele veranschaulicht werden.

### BEISPIELE

### Beispiele 1, Vergleichsbeispiele 1 und 2

Kautschukmischungen der Zusammensetzung gemäß Tabelle 1 wurden hergestellt:

**Tabelle 1**

| | Beispiel | Vergleichsbeispiele | |
|---|---|---|---|
| | 1 | 1 | 2 |
| | Gew.-Teile | Gew.-Teile | Gew.-Teile |
| NR; SMR-10¹⁾ | 30 | 30 | 30 |
| S-SBR; Buna VSL 5025-0²⁾ | 30 | 30 | 30 |
| BR; Buna CB 25³⁾ | 40 | 40 | 40 |
| Ultrasil 7000⁴⁾ | 100 | 100 | 100 |
| Si-69⁵⁾ | 7,5 | 7,5 | 7,5 |
| TDAE-Öl | 40 | 40 | 40 |
| Ruß; N339 | 10 | 10 | 10 |
| ZnO | 2,5 | 2,5 | 2,5 |
| 6PPD⁶⁾ | 2 | 2 | 2 |
| Wachs; Antilux 654 | 2 | 2 | 2 |
| Stearinsäure | 1 | 1 | 1 |
| Mischung c) + d)⁷⁾ | 5 | | |
| Aktiplast GT⁸⁾ | | 5 | |
| Aktiplast ST⁹⁾ | | | 5 |
| | | | |
| Schwefel | 2 | 2 | 2 |
| CBS¹⁰⁾ | 2 | 2 | 2 |
| Rhenogran DPG 80 ¹¹⁾ | 2,5 | 2,5 | 2,5 |

| | | | |
|---|---|---|---|
| 1) Naturkautschuk; SMR = Standard Malaysian Rubber Specification; 10 = Qualitätsgrad; | | | |
| 2) Lösungs-Vinyl-Butadien-Styrol-Kautschuk (Bayer); | | | |
| 3) Lösungs-Butadienkautschuk (Bayer); | | | |
| 4) Kieselsäure; Degussa; | | | |
| 5) [(C₂H₅O)₃Si(CH₂)₃S₂]₂ (TESPT) Degussa; | | | |
| 6) N-(1,3-Dimethylbutyl)-N'-phenyl-p-phenylendiamin; Rhein Chemie Rheinau GmbH | | | |
| 7) Mischung aus 25 Gew.-% TMP, 70 % Fettsäuren (gehärtete Talgfettsäuren) und 5 Gew.-% Polyethylenglykol; | | | |
| 8) Zinksalze ausgewählter hochmolekularer hauptsächlich gesättigter Fettsäure; Rhein Chemie Rheinau GmbH | | | |
| 9) Mischung aus Kohlenwasserstoffen, Zn-Seifen und Füllstoffen; Rhein Chemie Rheinau GmbH | | | |
| 10) N-Cyclohexyl-2-benzothiazolsulfenamid; Bayer AG | | | |
| 11) N,N'-diphenylguanidin 80-%ig in EPDM/EVA; violettes Granulat; Rhein Chemie Rheinau GmbH, | | | |

Das Mischen der Komponenten erfolgte in üblicher Weise, wobei die Aktivatoren, Vulkanisationsmittel und Beschleuniger zum Schluss zugesetzt wurden.

Die erhaltenen Mischungen wurden im Rheometer untersucht.

Die Ergebnisse sind in der folgenden Tabelle 2 gezeigt:

**Tabelle 2**

| | Beispiel 1 | Vergleichsbeipiel 1 | Vergleichsbeipiel 2 |
|---|---|---|---|
| Mooney ML1 + 4/100°C | 56 | 63 | 75 |
| Rheovulcameter; IM-Volumen (mm³) | 1705 | 1370 | 1005 |
| Rheovulcameter; IM-Geschwindigkeit (g/mm³) | 49 | 42 | 30 |
| Mooney-scorch; t-5 (min) | 17:92 | 21:68 | 16:53 |
| Mooney-scorch; t-35 (min) | 24:37 | 30:45 | 24:30 |

Die weiteren physikalischen Daten wurden an vulkanisierten Proben bestimmt.

**Tabelle 3 zeigt die erhaltenen Ergebnisse:**

| | Beispiel 1 | Vergleichsbeipiel 1 | Vergleichsbeipiel 2 |
|---|---|---|---|
| Modul 100 (MPa) | 3,76 | 3,14 | 3,33 |
| Modul 300 (MPa) | 12,1 | 10,2 | 10,9 |
| Tensile Strength (MPa) | 17,1 | 17,05 | 16,44 |
| Elongation at break | 422 | 479 | 426 |
| Hardness (Shore a) | 79 | 79 | 80 |
| Tear strength (N/mm) | 66,4 | 47 | 53 |
| Rebound | 33 | 35 | 35 |

Die Ergebnisse zeigen, dass die unter Verwendung der erfindungsgemäßen, die Komponente c) und d) enthaltenden, Mischung hergestellten Kautschukmischungen deutlich verbesserte Verarbeitungseigenschaften aufweisen (geringere Mooney-Viskosität, höheres Rheovulcameter IM-Volumen (mm³) und höhere Rheovulcameter-IM-Geschwindigkeit (g/mm³), ohne dass dabei die physikalischen Eigenschaften der vulkanisierten Mischungen verschlechtert sind (s, Tabelle 3).

## Patentansprüche

1. Vulkanisierbare Kautschukmischung, enthaltend
a) mindestens ein Dienelastomer,
b) mindestens einen hellen Füllstoff,
c) Trimethylolpropan,
d) mindestens eine Fettsäure und
e) gegebenenfalls weitere Kautschukadditive.

2. Kautschukmischung nach Anspruch 1 , worin das Dienelastomer a) mindestens ein Lösungs-SBR umfasst.

3. Kautschukmischung nach einem der Ansprüche 1 oder 2, worin der helle Füllstoff b) mindestens einen oxidischen Füllstoff umfasst.

4. Kautschukmischung nach einem der Ansprüche 1 bis 3, worin der helle Füllstoff b) mindestens eine Kieselsäure umfasst.

5. Kautschukmischung nach einem der Ansprüche 1 bis 4, die als Komponente e) mindestens ein Kupplungsmittel für den hellen Füllstoff b) umfasst,

6. Kautschukmischung nach einem der Ansprüche 1 bis 5, die als Komponente e) mindestens ein polysulfidhaltiges Alkoxysilan umfasst.

7. Kautschukmischung nach einem der Ansprüche 1 bis 6, die als Komponente e) mindestens ein Vulkanisationsmittel umfasst,

8. Kautschukmischung nach einem der Ansprüche 1 bis 7, die als Komponente e) mindestens einen Vulkanisationsbeschleuniger umfasst.

9. Kautschukmischung nach Anspruch 8 worin der Vulkanisationsbeschleuniger mindestens ein Bestandteil ist, der aus der Gruppe ausgewählt wird, die besteht aus:
(i) Dithiophosphat-Verbindungen,
(ii) Sulfenamid-Verbindungen und
(iii) Thiazol-Verbindungen.

10. Kautschukmischung nach einem der Ansprüche 1 bis 9, worin die Summe der Mengen der Komponenten c) und d) 0,1 bis 20 Gew.-Teile, bezogen auf 100 Gew.-Teile der Komponente a), beträgt.

11. Kautschukmischung nach einem der Ansprüche 1 bis 10, worin die Komponenten c) und d) in Form einer Mischung zugesetzt werden.

12. Kautschukmischung nach einem der Ansprüche 1 bis 11, enthaltend, bezogen auf 100 Gew.-Teile der Komponente a): von 5 bis 100 Gew.-Teile eines oder mehrerer heller Füllstoffe, von 0,1 bis 20 Gew.-Teile der Komponenten c) und d), wobei sich die Mengenangabe auf die Summe der Mengen der Komponenten b) und c) bezieht,
von 0,1 bis 10 Gew.-Teile mindestens eines
Vulkanisationsmittels,
von 0 bis 150 Gew.-Teile eines oder mehrerer weiterer Kautschukadditive.

13. Kautschukmischung nach einem der Ansprüche 1 bis 12, worin das Gewichtsverhältnis der Komponente c) zur Komponente d) von 10 : 1 zu 1 : 20 beträgt.

14. Kautschukmischung nach einem der Ansprüche 1 bis 13, worin die Fettsäure (Komponente d)) ein Gemisch von Fettsäuren ist.

15. Kautschukmischung nach einem der Ansprüche 1 bis 14, worin die Fettsäure (Komponente d)) eine Mischung gehärteter und/oder ungehärteter Fettsäuren, die sich aus Talg ableiten, ist,

16. Kautschukmischung nach einem der Ansprüche 1 bis 15, die durch Zugeben einer Mischung von Trimethylolpropan und mindestens einer Fettsäure zu einer Mischung der Komponenten a) und b) und gegebenenfalls eines Kupplungsmittels für die Komponente b) erhältlich ist.

17. Verfahren zur Herstellung einer vulkanisierbaren Kautschukmischungen nach einem der Ansprüche 1 bis 16, das den Zusatz mindestens einer Mischung, enthaltend Trimethylolpropan und mindestens eine Fettsäure, zu einer Kautschukmischung umfasst.

18. Verfahren nach Anspruch 17, das die folgenden Schritte umfasst:
(i) Mischen mindestens eines Dienelastomers, mindestens eines hellen Füllstoffs und gegebenenfalls mindestens eines Kupplungsmittels für den genannten Füllstoff, anschließend
(ii) Zugeben einer Mischung, enthaltend Trimethylolpropan und mindestens eine Fettsäure, und anschließend
(iii) Zugeben der übrigen Bestandteile der Kautschukmischung.

19. Verfahren zur Herstellung einer vulkanisierten Kautschukmischung, das das Vulkanisieren der vulkanisierbaren Kautschukmischungen nach einem der Ansprüche 1 bis 16 oder der nach den Ansprüchen 17 oder 18 erhaltenen Kautschukmischungen umfasst.

20. Vulkanisierte Kautschukmischung, erhältlich nach dem Verfahren nach Anspruch 19.

21. Verwendung der Kautschukmischung nach Anspruch 1 bis 15 oder der nach den Ansprüchen 17 oder 18 erhaltenen Kautschukmischungen zur Herstellung von Luftreifen oder Halbfertigprodukten für Luftreifen,

22. Verfahren zur Herstellung von vernetzten Elastomerformtellen, das das Einbringen der Kautschukmischungen nach einem der Ansprüche 1 bis 15 oder der nach den Ansprüchen 17 oder 18 erhaltenen Kautschukmischungen in eine Form und das anschließende Vulkanisieren der Kautschukmischungen in der Form umfasst.

23. Elastomerformteil, erhältlich nach dem Verfahren nach Anspruch 22.

24. Verwendung einer Mischung, enthaltend Trimethylolpropan und mindestens eine gehärtete und/oder ungehärtete Fettsäure, als Verarbeitungshilfsstoff für Kautschukmischungen.

25. Verwendung nach Anspruch 24 als Verarbeitungshilfsstoff für helle Füllstoff enthaltende Kautschukmischungen.

26. Mischung, enthaltend Trimethylolpropan und mindestens eine gehärtete und/oder ungehärtete Fettsäure,

27. Mischung nach Anspruch 26, worin die Gesamtmenge von Trimethylolpropan und Fettsäure(n) mindestens 80 Gew.-%, bezogen auf das Gewicht der Mischung beträgt.

28. Mischung nach Anspruch 26 oder 27, worin das Gewichtsverhältnis des Trimethylolpropans zu den Fettsäure(n) von 10 : 1 bis 1 : 20 beträgt.

29. Mischung nach einem der Ansprüche 26 bis 28, worin die Fettsäure (Komponente d)) ein Gemisch von Fettsäuren ist.

30. Mischung nach einem der Ansprüche 26 bis 29, worin die Fettsäure (Komponente d)) eine Mischung gehärteter und/oder ungehärteter Fettsäuren, die sich aus Talg ableiten, ist,

31. Mischung nach einem der Ansprüche 26 bis 30, worin die Fettsäure (Komponente d)) eine Mischung gehärteter und/oder ungehärteter Fettsäuren, die sich aus Talg ableitet, ist, die Stearinsäure, Palmitinsäure und Myristinsäure enthält.
